**Europäisches Patentamt**

(19) **European Patent Office**

**Office européen des brevets**

(11) Publication number : **0 313 086 B1**

(12) ## EUROPEAN PATENT SPECIFICATION

(45) Date of publication of patent specification :
27.02.91 Bulletin 91/09

(51) Int. Cl.$^5$ : **F02M 25/02, B01F 5/00**

(21) Application number : **88117601.0**

(22) Date of filing : **21.10.88**

(54) **Method for mixing fuel with water and apparatus for carrying out the method.**

(30) Priority : **23.10.87 EP 87115582**
**30.09.88 EP 88116218**

(43) Date of publication of application :
**26.04.89 Bulletin 89/17**

(45) Publication of the grant of the patent :
**27.02.91 Bulletin 91/09**

(84) Designated Contracting States :
**AT BE CH DE ES FR GB GR IT LI LU NL SE**

(56) References cited :
**EP-A- 0 263 443**
**WO-A-83/01210**
**DE-A- 2 230 071**
**DE-A- 2 757 419**
**DE-A- 3 504 699**
**FR-A- 1 572 021**
**GB-A- 2 062 091**
**US-A- 3 606 868**
**US-A- 4 087 862**

(73) Proprietor : **"HARRIER" GMBH**
**GESELLSCHAFT FÜR DEN VERTRIEB**
**MEDIZINISCHER UND TECHNISCHER**
**GERÄTE**
**Prälat-Zistl-Strasse 6**
**D-8000 München 2 (DE)**

(72) Inventor : **Ott, Walter, Dr.**
**Dorfstrasse 29**
**CH-8712 Stäfa (CH)**
Inventor : **Zürcher, Werner**
**Letzigraben 120**
**CH-8047 Zürich (CH)**
Inventor : **Steinmeier, Roland**
**Bahnstrasse 16**
**CH-8603 Schwerzenbach (CH)**
Inventor : **Kolta, Peter**
**Kando K. 11**
**H-7623 Pécs (HU)**
Inventor : **Lantos, Michael**
**Csopaki U. 5/A**
**H-1022 Budapest (HU)**
Inventor : **Kessler, A.**
**Tellistrasse 43**
**CH-5000 Aarau (CH)**

(74) Representative : **Patentanwälte Viering &**
**Jentschura**
**Steinsdorfstrasse 6**
**D-8000 München 22 (DE)**

**Description**

METHOD FOR MIXING FUEL WITH WATER AND APPARATUS FOR CARRYING OUT THE METHOD

The invention relates to a method for mixing fuel, which can either be a diesel fuel or a heating combustible, with water to obtain a combustible emulsion, in which the amount of water to fuel falls in a range of 5 to 20 Vol%, wherein the fuel and the water are injected in a closed space in a ratio falling in this range and are intensively moved to obtain a physical mixture. The invention relates also to an apparatus for providing such emulsion.

It has been known for a long time that the addition of a small amount of water to diesel fuel or heating combustible can decrease the unwanted components of the exhaust gases in a diesel motor and in heating systems. A number of ways have been suggested to the production of emulsions of fuel and water that can be used in diesel motors instead of pure diesel fuel and in heating systems instead of pure heating combustible. A first part of such solution related to the use of a specific emulgator by which a stable emulsion could be obtained. The use of such emulsions have not obtained wide acceptance so far, mainly due to their high costs and several limitations.

The second part of such solutions related to the physical mixture of the two components without any emulgator. The main problem lies in that water and fuel cannot be mixed easily, and high energy is required for the preparation of such emulsions. International publication WO 83/01210 relates to a high energy emulsifier, in which the components are vaporized by passing them through a small bore under the effect of very high pressur resulting in an emulsion with water dropects with diameters in the range of .01 to 2 microns.

U.S. patent 4,087,862 relates to another mixing apparatus, in which the components are whirling through conically tapering and expanding chambers in opposite rotational directions.

Further, a method according to the introduction part of claim 1 is known from US-A-3 606 868, wherein the amount of water to gasoline falls in the range of 0 to 50 Vol.%, the reaction space being a mixing chamber with rotary stirring means, the emulsion being introduced into the carburator of an internal combustion engine and a portion of the emulsion being recirculated from the carburator fuel chamber to the mixing chamber. In this known method, an emulsion agent is used for preparing the emulsion.

EP-A-0 263 443, having an earlier priority date with respect to present claims 1, 2 and 4 to 9 and being a prepublished prior art with respect to claims 3 and 10 to 16, discloses an apparatus for mixing fuel and water according to the introduction part of claim 10. In this apparatus the emulsion prepared in the reaction chamber is introduced into a storage chamber being also formed as a vortex chamber, from which the outlet for supplying the water-in-diesel fuel emulsion to the injection pump of a diesel engine is branched off.

The use of some extent of water in diesel fuel decreases the operational temperature in the engine and reduces certain unwanted exhaust gases. It is also known that the reduction of these components occurs in the expense of the increase of other unwanted components so that the benefits of using such emulsions cannot compensate the costs and problems connected with their application. This explains that the use of such emulsions has not obtained wide acceptance so far.

The main object of the invention is to provide a method for producing a fuel-water emulsion that can be used in diesel engines or heating systems to improve efficiency and to reduce unwanted components of exhaust gases without the remarkable increase of other ones.

A further object of the invention is to provide an apparatus for carrying out the method.

According to the invention a method has been provided for obtaining a combustible emulsion, in which the amount of water to fuel falls in a range of 5 to 20 Vol%, in which the fuel and the water are fed in a reaction space in a ratio falling in this range and are intensively moved and recirculated in a closed loop, which the reaction space is provided, the streaming fluid being forced to rotate around and moved along the axis of rotation of the reaction space and a portion of the recirculated fluid is led out of the loop. The reaction space has a tapering cross-section in flow direction so that the pressure continuously decreases both along the axis and in radial direction towards the axis, the fluid which is rotating around the axis when leaving the reaction space is caused to rotate around a second axis being normal to the first axis which causes gradual braking down and cessation of the first rotation movement, wherein the ratio between the mixture portion led out of the loop and the recirculating mixture is at most 1 : 10 so that in average the fluid particles are caused to participate at least in ten full recirculation cycles before they would leave the loop.

In a first embodiment the fluid flowing out from the reaction space is passed tangentially in a vortex chamber to form a vortex around said second axis.

In a second embodiment the fluid flowing out from the reaction space is directed to flow in an inward spiral movement around the second axis, said led out portion of the recirculated fluid being branched off at the starting point of said spiral movement.

An apparatus has also been provided for mixing fuel and water that comprises a recirculating pump, recirculating path between outlet and inlet of the pump, a reaction chamber arranged as a static mixer inserted in the path, means for supplying a mixture of fuel and water in the path and outlet for supplying the emulsion, wherein the reaction chamber has a rotational symmetrical form around a first axis and has preferably a cross-sectional profile similar to a heart form, the reaction chamber has a head portion with tangential inlet holes around the periphery communicating with a ring channel defined around the periphery and fed from the pump, the reaction chamber has a tapering portion with an outflow opening, a spiral channel is provided with a central axis normal to the axis of the reaction chamber, the outflow opening communicates with peripheral part of the spiral channel and a bore is defined at the central portion of the spiral channel which is connected to the recirculation path, wherein said outlet is branched off at the entry of the spiral channel.

It is preferable if a biased return valve is inserted in the recirculating path.

Optimum effects can be attained if the tapering portion has an exponential profile.

In a preferable embodiment the means for supplying mixture of fuel and water comprise an electromagnet with a shaft reciprocating in axial direction, separate fuel pump and water pump have respective pistons mounted on the shaft, the pumps have respective inlet and outlet valves, the outlet valves have outflow ports communicating with a emulsion channel connected to the recirculation path.

It is preferable if the water pump has a piston element biased by springs so that the coupling thereof with the shaft depends on the pressure prevailing in the emulsion channel to decrease or stop pumping of water if the pressure in the channel increases above a predetermined threshold value.

In a preferable use the outflow opening is coupled to a fuel injection pump of a diesel engine provided by a return line which is fed back to the recirculation path, and the apparatus comprises means for adjusting fuel supply of the engine in accordance with water content in the emulsion to compensate loss of power.

The technical solution provided by the present invention results in a unique novel emulsion which has excellent properties regarding the effective decrease of unwanted components from exhaust gases, distinctively better than known emulsions, its generation does not require much energy and can be used for diesel engines or in the form of heating combustible in heating systems.

The invention will now be described in connection with preferable embodiments thereof, in which reference will be made to the accompanying drawings. In the drawings :

Fig. 1 shows the upper part of the apparatus according to the invention,

Fig. 2 shows the lower part of the apparatus of Fig. 1,

Fig. 3 is a section along the vortex housing 6 of Fig. 1 along a plane normal to the longitudinal axis 9,

Fig. 4 is a section taken along the first block 1 of Fig. 1 in the equatorial plane,

Fig. 5 shows the recirculating pump of a second embodiment,

Fig. 6 shows the reaction part of this embodiment,

Fig. 7 shows the fuel and water pump portion,

Fig. 8 shows the spiral channel 53 in top view,

Fig. 9 is an enlarged sectional view of piston element 77,

Fig. 10 is a kinematic sketch illustrating fuel rate control, and

Fig. 11 shows the droplet size distribution in a sample.

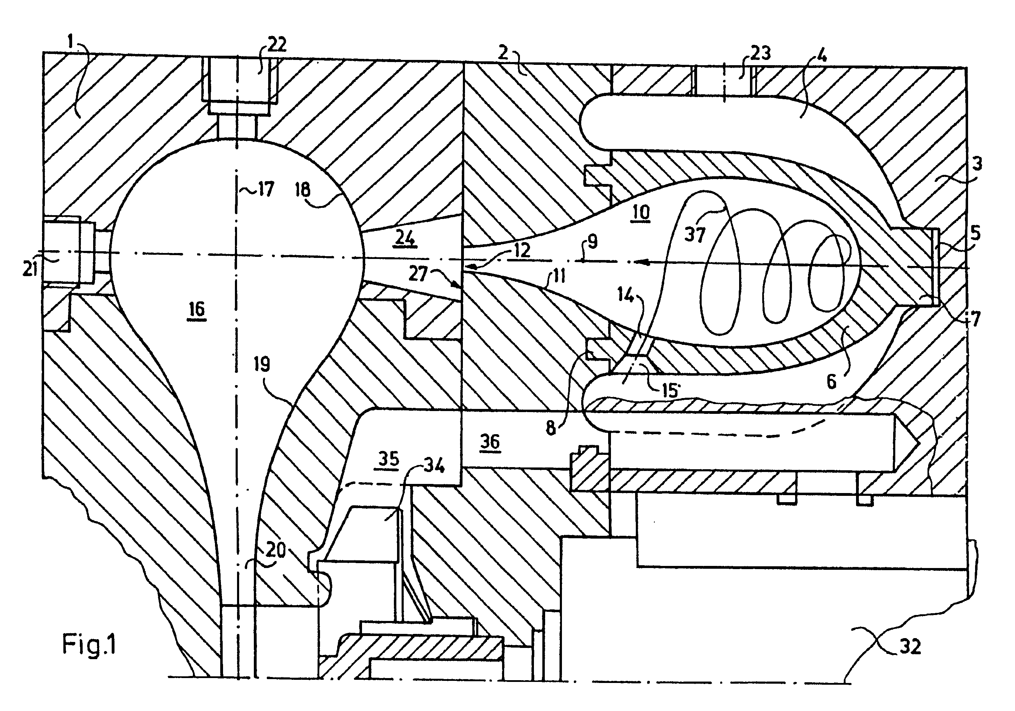

The first embodiment of the mixing apparatus according to the invention shown in Figs. 1 to 4 has an upper part which comprises a first or main metal block 1, a second block 2 and a box-like third block 3. The third block 3 is attached by means of threaded bolts led through the second block 2 to the right side of the first block 1 and the three blocks form a rigid mechanical unit. The third block 3 has a large central cylindrical cavity 4 which has a spherical end with a circular nest hole 5 in the middle. A vortex housing 6 is fixed in the cavity 4 by means of stud 7 fitted in the nest hole 5 and of a flange 8 fitting in a cylindrical recess in the second block 2.

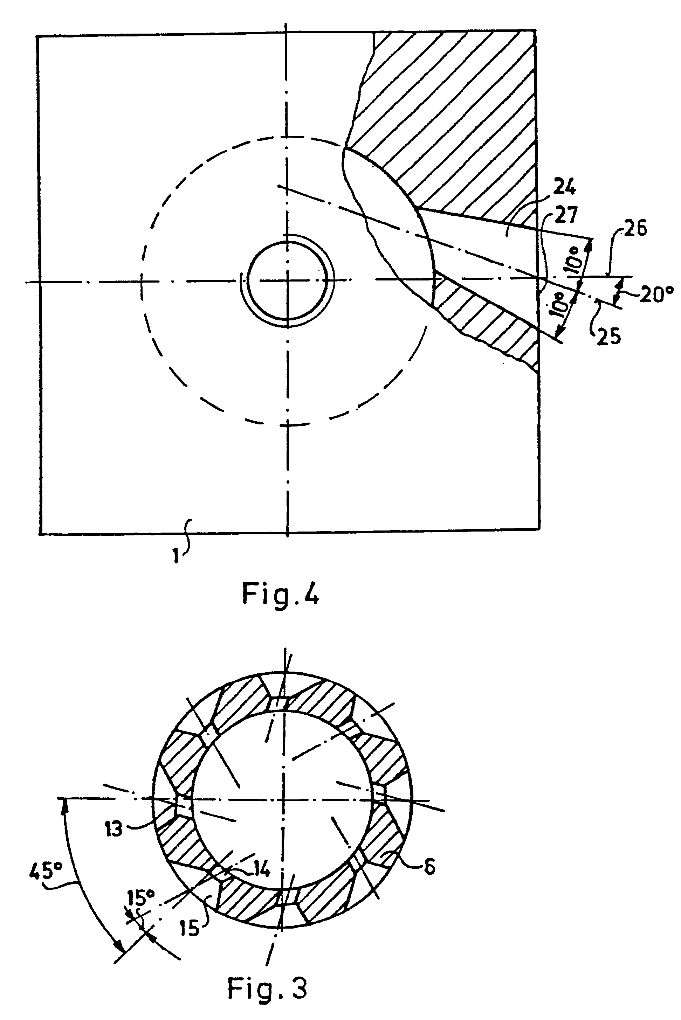

The vortex housing 6 is an elongated symmetrical element with a horizontal axis 9 of rotation. The outer contour line of the vortex housing 6 is curved in axial direction to substantially correspond to the shape of the cavity 4, whereby an annular pressure chamber is formed around the vortex housing 6. An ellipsoidal vortex chamber 10 is defined in the vortex housing 6 with a tapering neck portion 11 made in the second block 2. The profile of the neck portion 11 has an inflexion plane and a mouth opening 12 at the left face of the block 2. Between the neck portion 11 and the middle of the ellipsoid eight evenly distributed inlet holes 13 are provided in the wall of the vortex housing 6 (Fig. 3). Every inlet hole 13 comprises a jet portion 14 with an axis slightly inclined in axial direction towards the dead end of the ellipsoid and a countersink 15 communicating with the associated jet portion 14. The angle of axial inclination is about 15-20°. Fig. 3 shows that the axes of the jet portions 14 are inclined also in the plane normal to the axis 9 and the angle of inclination relative to the corresponding radius is about 15°. The countersinks 15 have axes substantially normal

3

EP 0 313 086 B1

to the mantle surface of the vortex housing 6.

The first block 1 defines a second vortex chamber 16 which has a balloon-like shape with a vertical axis 17 of rotation. The second vortex chamber 16 has a substantially spherical upper part 18, a downwardly tapering medium part 19 which has a shape of a rotational hyperboloid and a short cylindrical neck 20.

Outflow opening 21 is defined at the equatorial plane of the spherical part 18 with an axis in line with the axis 9 of the first vortex chamber 10. The outflow opening 21 leads to the left side wall of the first block 1, and end of an outflow pipe (not shown in the drawing) can be fitted therein. Air discharge hole 22 is made in the upper wall of the first block 1 that enables deaeration of the second vortex chamber 16. In the upper wall of the third block 3 a further air discharge hole 23 is provided for the deaeration of the cavity 4.

An oblique conical duct 24 is provided in the first block 1 extending between the mouth opening 12 of the first vortex chamber 10 and the second vortex chamber 16. Fig. 4 shows that the duct 24 has an axis 25 closing an angle of about 20° with the horizontal axis 26 of the second vortex chamber 16 defined in the equatorial plane. The cone angle of the inwardly tapering duct 24 is also about 20°. The outer mouth 27 of the duct has a diameter larger than that of the mouth opening 12 of the first vortex chamber 10 which latter opening 12 is arranged concentrically in the centre zone of the mouth 27. The duct 24 provides a quasi-tangential passage between the two vortex chambers 10 and 16.

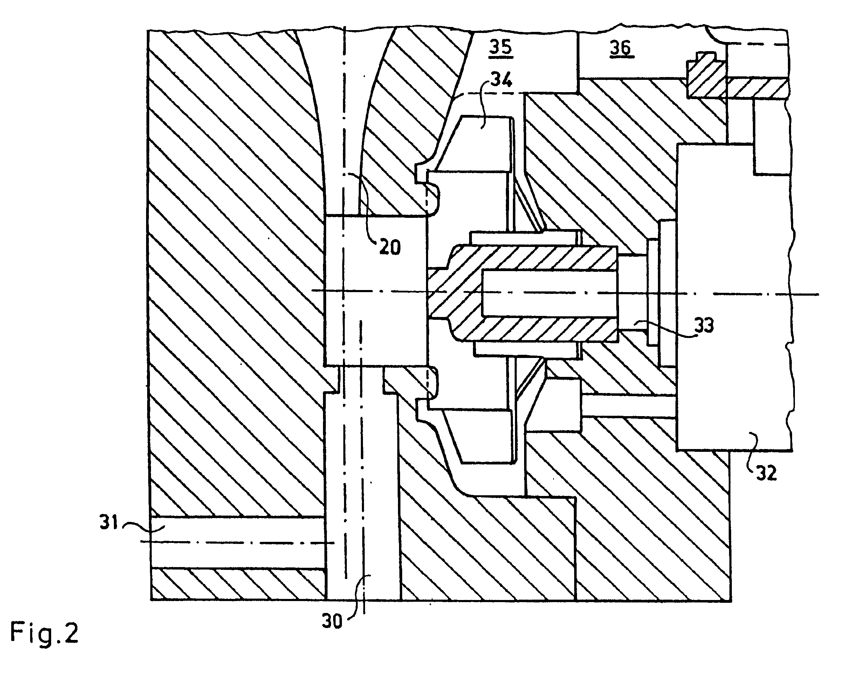

Fig. 2 shows the lower part of the apparatus of Fig. 1. In the extension of the open neck 20 of the second vortex chamber 16 a vertical cylindrical bore 30 is formed in the first block 1. The bore 30 is open at the bottom to which a return line can be connected with unused (excess) fuel-water mixture. An inflow bore 31 is arranged in the first block 1 that communicates with the bore 30. The inflow bore 31 has a pipe connection to which a feeder pipe of pre-mixed diesel fuel and water can be connected.

A pump motor 32 is mounded to the third block 3 that has a horizontal shaft 33 inserted in and sealed from a bore of the second block 2. A pump wheel 34 is mounted to the inner end of the shaft 33. A cylindrical cavity 35 is provided between the first and second blocks 1 and 2, in which the wheel 34 is arranged. In front of the central portion of the wheel 34 the cavity 35 communicates with a widening of the vertical bore 30. Radially above the cavity 35 a horizontal channel 36 is provided in the second and third blocks 2, 3 that leads to the annular cavity 4 around the vortex housing 6.

A preferable use of the apparatus is the insertion thereof in the fuel feeding line of a diesel engine or of a heating burner. In the first case the outflow opening 21 should be connected to the fuel inlet of an injection pump. Since the outflow rate of the emulsion generated by the apparatus according to the invention is relatively stable and the fuel consumption of the diesel engine is fluctuating, the surplus quantity is returned. The return line of the injection pump is connected to the lower end of the vertical bore 30 which must be open. The return of the excess amount of emulsion in the circulating flow further improves the uniformity of the emulsion.

Such an operation requires that the feed of the fuel and water be pressure-sensitive, so that outflow rate be always equal with the sum of the return and supply rates. In the exemplary embodiment with the pump rate of 3000 l/h and with a return feed line, the pressure distribution in the system was as follows : in the inlet side of the pump wheel 34 : 1.1 bar, in the pressure equalizing cavity 4 : 3.3 bar, in the periphery of the equatorial plane of the second vortex chamber 16 : 2.2 bar.

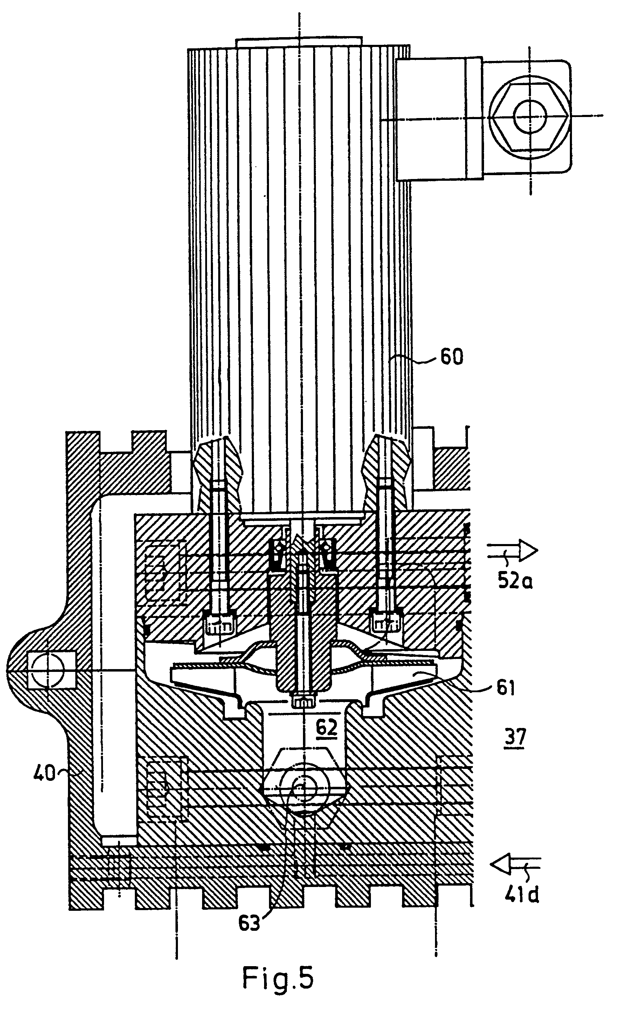

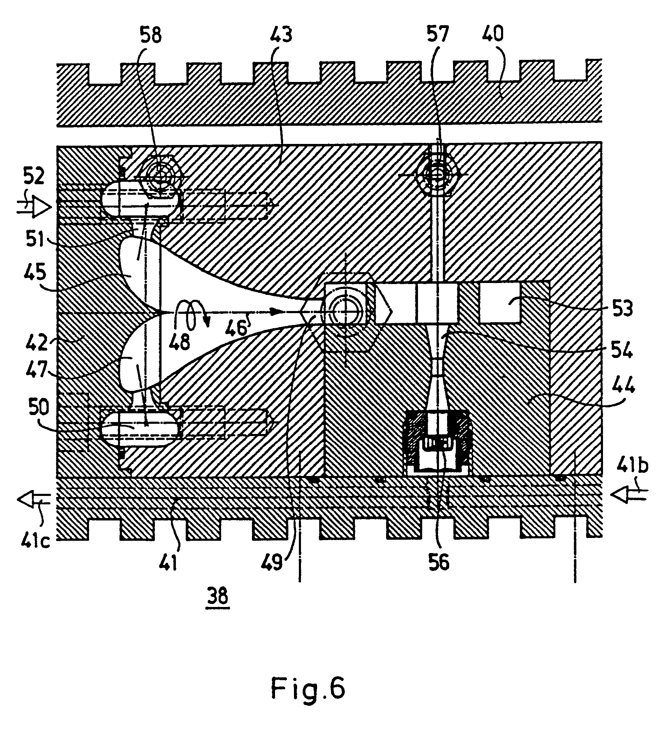

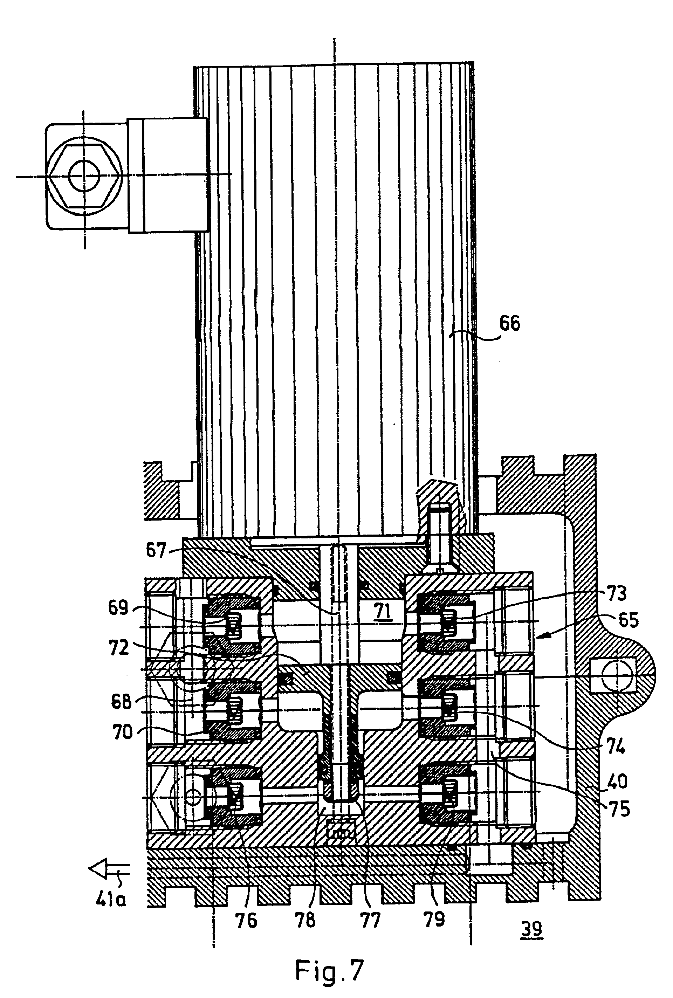

A second embodiment of the mixing apparatus according to the invention is shown in Figs. 5 to 8 in such a way that the apparatus is cut in three adjoining parts 37, 38, 39. The medium part 38 is shown in Fig. 6, the left part 37 on Fig. 5 while the right part 39 in Fig. 7. The apparatus has a metal constructional housing 40 provided with ribs at the top and bottom to facilitate cooling. Main channel 41 extends along the bottom of the housing 40 parallel to but offset from the plane of the drawing. Arrows 41a, b, c and d show directions of flow in the channel 41. The medium part 38 consists of three metal blocks 42, 43 and 44. Blocks 42 and 43 define reaction chamber 45 which has a profile resembling to a heart symbol and it has a rotational symmetry around axis 46. Reaction chamber 45 has a head or inlet portion 47 and an exponentially tapering portion 48 with outflow opening 49. Ring channel 50 encircles the head portion 47 and a number of tangential inlet holes 51 connect the ring channel 50 with the head portion 47 of the reaction chamber 45. The inlet holes 51 are arranged and directed as the corresponding inlet hole 13 are in the first embodiment, so that Fig. 3 illustrates this embodiment as well.

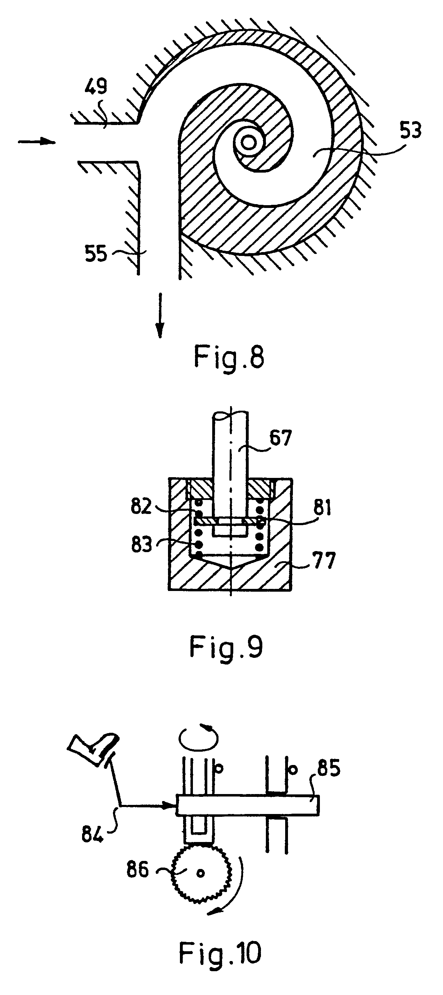

Inflow channel 52 is provided in the block 42 which communicates with the ring channel 50 through which pressurized emulsion is passed to the channel. The third block 44 comprises spiral channel 53 illustrated in the top view of Fig. 8. The spiral channel 53 extends horizontally in the plane of the axis 46 of the reaction chamber, it has a uniform width and at the central portion the spiral channel 53 communicates with a vertical bore with an axis 54 normal to the plane of the spiral channel. The outflow opening 49 of the reaction chamber 45 extends radially in the spiral channel 53 as shown in Fig. 8. Emulsion outlet duct 55 which extends normal to the plane of Fig. 6 communicates with the spiral channel 53 and it is used to lead out

4

emulsion to end use which can be a fuel injection pump or an oil burner. Fig. 8 shows that the duct 55 extends in tangential direction with respect to the spiral. In alternative embodiment the inflow to the channel from the reaction chamber can be arranged in tangential direction. The lower end of the vertical bore extending around the vertical axis 54 is connected to return valve 56 of a spring loaded type designed to open if a pressure of at lest about 1.2 bar acts on it from the direction of the bore. The other side of the return valve 56 communicates with the main channel 41.

Respective air discharge elements 57 and 58 are arranged in the middle part to let air out from the cavities before operation.

The left part 37 shown in Fig. 5 is substantially a recirculating pump which sucks emulsion in from the main channel 41 as shown by arrow 41d and pumps the emulsion back to inflow channel 52 of the middle part 38. The recirculating pump 60 comprises a vane wheel 61 driven by an electrical motor with a predetermined speed. The flow rate of the pump 60 is typically 3000 l/h. The end of the main channel 41 communicates with a vertical bore 62 at the inlet side of the recirculating pump 60. Inlet duct 63 for receiving return line from the injection pump is provided and it communicates with the vertical bore 62.

The right part 39 shown in Fig. 7 is a fuel supply pump 65 adapted to supply a mixture of diesel fuel and water into the main channel 41 so that a predetermined proportion is kept between the two components. The pump 65 comprises an electromagnet 66 oscillating with a frequency between about 3 and 7 Hz and provided with shaft 67 performing a reciprocating axial displacement with an amplitude of about 5mm.

A diesel fuel inlet channel 68 is provided at the left side of part 39 communicating with a fuel inlet duct. A forcing and sucking fuel pump is formed which comprises a pair of spring loaded inlet valves 69, 70 with a bias of about. 9 bar with inlet side connected to the channel 68 and outlet side communicating with a cylindrical cavity 71 separated by piston 72 mounted on the shaft 67 and a pair of spring loaded outlet valves 73, 74 having a bias pressure of about 1.5 bar and opening under the effect of pressure increase in the cylinder 71. Outflow side of the outlet valves communicate with emulsion channel 75 connected to the main channel 41.

A separate water pump is provided at the lower end of the shaft comprising a spring loaded water inlet valve 76 with a bias pressure of about .28 bar, a cylindrical piston element 77, a second cylinder 78, a spring loaded outlet valve 79 with a bias pressure of 1.5 bar. The inlet side of the inlet valve 76 communicates with water inlet channel 80, and the outflow side of the outlet valve communicates with the emulsion channel 75. The proportion of fuel to water can be changed by replacing the piston element 77 with an other one which has different diameter selected in accordance with the required proportion of fuel to water.

In an alternative embodiment of the water pump, it can be preferable that no or decreased amount of water be added to the diesel fuel if there is no load on the engine. Since the unloaded state of the engine is accompanied with an increase in pressure at the inflow port of the injection pump, a regulation based on the actual pressure value can be accomplished. At this inflow port which is connected to the emulsion outflow duct 55 of the apparatus (Fig. 8), the typical pressure associated with full engine load is 2.2 bar and the pressure without load is typically 2.7 bar. Such a regulation can be made e.g. if the connection between the lower end of the reciprocating shaft 67 and the piston element 77 is made as shown in Fig. 9. Piston element 77 has a central cylindrical bore closed at the outer end by a threaded closure ring. A disc element 81 is attached to the shaft in the medium height of the cylindrical bore, and respective coil springs 82, 83 press both sides of the disc element 81. The bias provided by the coil springs 82, 83 is sufficiently high to firmly connect the piston element 77 with the shaft 67 if the pressure in the water chamber around the piston element 77 corresponds to normal run of the engine. If there is no load on the engine, the pressure in the emulsion channel 75 increases to a value of about 2.7 bar. Water can be supplied if the inner pressure can open the water outlet valve 79 and this can be done only if the pressure acting on the piston element 77 is sufficiently high. The bias force of the coil springs 82, 83 can be adjusted to a value at which the piston element 77 cannot follow the reciprocating movement of the shaft 67 and the disc element 81 will move up and down in the immobile piston element 77. Such a design can effectively close water supply at no load condition. It can also be made that the movement of the piston element and the associated water supply decrease gradually as the engine gets close to the no load condition.

Fig. 10 is a sketch illustrating how can fuel supply be increased to avoid power drop due to the presence of water when this presence exceeds about 10 Vol%.

The gas pedal of a vehicle having a diesel engine is coupled through linkage 84 to control rod 85 that moves in axial direction. The control rod 85 is connected through appropriate coupling members to control gear transmission 86 which adjusts fuel rate supplied by injection pump of the engine. If the presence of excess water is a preset value e.g. 20% and it is independent from the load, then a compensation can be solved by a predetermined forward displacement of the control rod 85. If in normal diesel way of operation the fuel supply is 16 mm$^3$/s at idle run and 56 mm$^3$/s at maximum load, then a linear displacement corresponding to an increase of 8 mm³/s would result in rates of 24 and 64 mm³/s, respectively. It is also possible, however, that the addition of the amount of water be dependent from the position of the control rod 85, then the addition of excess fuel compared to normal feeding should be made to correspond to actual proportion of water to fuel in the emulsion. This condition can be made e.g. by a non-linear design of the gear transmission 86.

The operation of the first embodiment of the apparatus according to the invention as shown in Figs. 1 to 4 is as follows.

Pre-mixed diesel fuel or heating combustible and water of predetermined proportion is supplied to the system via the inflow bore 31. Before normal operation begins, the air in the cavities should be removed. This can be done through the two air discharge holes 22, 23. Let us suppose that no return line is connected to the lower end of the vertical bore 30 and it is closed temporarily. The pump motor 32 is started to run and the pump circulates the mixture in a closed loop. The suction side of the pump wheel 34 is at the vertical bore 30, while the pressure side is at the channel 36. The pump provides a flow of about 1100 to 3300 l/h preferably 3000 l/h, and the pressure difference between the two sides of the wheel 34 is about 1 to 3 bar, at a flow rate of 3000 l/h about 2.1 bar.

The liquid will fill the annular cavity 4 around the vortex housing 6 and an intensive flow takes place through the tangential jet portions 14 of the inlet holes 13. Owing to the specific rear and tangential orientation of the jet portions 14 and of the form of the first vortex chamber 10, a vortex is created therein which can be characterized by spiral arrow 37 indicated in the first vortex chamber 10. The peripheral zone of the rotating liquid streams towards the dead end of the ellipsoidal space, and from here it will be reflected in forward direction towards the tapering neck portion 11 in the central zone around the axis 9. In this central zone an intensive rotation takes place around the axis 9, the pressure decreases and it reaches a minimum at the zone of the mouth opening 12, since the velocity of the flowing fluid is at maximum here.

It is well known in the art that diesel fuel has a certain degree of compressibility, i.e. the volume thereof slightly varies with the pressure. Compared to fuel water has practically no compressibility at all. The pressure of the rotating mixture will drop as it flows along the tapering neck portion, takes a minimum at the mouth opening. Owing to the braking effects of the wall, the pressure decreases in radial direction towards the axis 9. When the liquid leaves the mouth opening 12 and enters the duct 24 that tapers in forward direction, the pressure increases as the cross-section of the duct 24 is substantially larger than that of the opening 12. The volume of the fuel slightly follows the variation of the pressure, while the volume of water remains unchanged. This flexible volume increase and decrease of fuel in combination with the intensive rotation around the axis 9 might contribute to the formation of the specific mixture of the two phases which will be explained in a later part of the specification. From the duct 24 the liquid is injected tangentially in the second vortex chamber 16 at the equatorial plane thereof. A double vortex will be formed in this chamber, since the injected liquid rotates around its axis of flow, and owing to the form of the second vortex chamber 16 and to the tangential inlet, a rotation around the vertical axis 17 takes also place. The sucking effect of the pump results in a vertical streaming of the rotating liquid.

The tapering form of the second vortex chamber 16 maintains the rotation and increases its speed in the proximity of the vertical axis 17. The speed distribution will be similar to the funnel of a tornado.

The mixture will be sucked in by the pump again and in the next cycle this process is repeated. The recirculated mixture of the fuel and water will be more and more evenly distributed, i.e. the size distribution of the water droplets will be uniform and by the end of about the tenth cycle the intensive changes in the pressure of the rotating emulsion an the concomitant force effects might cause changes in the structure of fuel that affect the burning properties of the emulsion.

A mixture with unique properties can be obtained continuously if the mixture is lead out of the system in a flow rate which is at most the tenth of the recirculating volume. If the pump provides a flow of 1500 l/h, then the output rate of the mixture can be at most 150 l/h. It is preferable, if the output rate is still less, e.g. 60 l/h which means that in average each liquid particle participates in 25 cycle before leaving the system. The value of 25 is obtained by the division of the two flow rates, i.e. 1500 : 60=25. Of course, this value will increase to 50 if the flow rate is increased to 3000 l/h.

The place from where the liquid can be lead out is rather critical. The liquid outflow should possibly not disturb the pressure distribution in the two vortex chambers and in the connecting passage. In the embodiment shown in Figs. 1 to 4 an optimum place is the equatorial plane of the second vortex chamber 16 where the outflow opening 21 has been provided.

The properties of the emulsion are largely independent from the absolute pressure values in the system. The absolute value of the pressure prevailing in the bore 30 (at the suction size of the pump) can be as high as 5 bars. It has been experienced that the quality of the emulsion has decreased when the pressure was increased above 6 bars. The pressure difference provided by the pump is more critical. A pressure increase of 1 to 2.2 bar can be optimum with dimensions shown in the drawings. This difference can be as high as 3 bars. The size and constructional design of the apparatus allows a large tolerance range regarding both the absolute and relative pressure values.

The operation of the second embodiment of the apparatus according to the invention shown in Figs. 5 to 8 is as follows.

In operation the recirculation pump 60 supplies emulsion at a rate of about 3000 l/h to channel 52 (at the left hand upper part of Fig. 6). The flow enters the ring channel 50 and from here the fluid will flow tangentially in head portion 47 of the reaction chamber 45. The fluid will intensively rotate around axis 46 and flow towards outflow opening 49. The pressure in the fluid decreases in radial direction towards the axis 46 in the tapering portion 48 and the rotational speed decreases in an opposite direction i.e. the speed of rotation will be at minimum at the chamber wall. The axial speed increases towards the outflow opening 49 and the axial flow component is decreasing in radial direction away from the axis. A pressure drop will be experienced in axial direction towards the outflow opening. It should be noted that the exponantially tapering form is preferable, since the pressure drop along the axis and the basic flow distribution is rather independent from the actual flow rate. This property of exponential formation is known in the field of acoustic, in which exponential horns are used to provide largely uniform sound pressure in a wide range of frequencies.

It is believed that layers will be formed in the flowing fluids will substantial velocity and pressure differences therebetween and the layers will slip away with respect to each other, whereby molecular shearing forces are created. These forces will reach a value higher than the surface tension of water droplets in the fuel. As a result of this the drops will be torn apart and the particles impinge fuel molecules. These molecules are usually very long and comprise portions between which low-energy binding forces exist. In the reaction the partial splitting of longer carbon-hydrogen molecules take place.

The fluid rotating intensively around its axis enters the spiral channel 53 in which an acceleration in a direction normal to the plane of rotation takes place. This longitudinal velocity gradient and the rotation of the fluid result in the continuation of this intensive mixing and droplet disruption process, and an emulsion with very uniform droplet size distribution is obtained.

In this regard similar events take place in the first and second vortex chambers in the first embodiment shown in Figs. 1 to 4.

From the vertical bore the emulsion is recirculated through channel 41 to the suction side of the recirculating pump 60, the pump increases pressure and passes the emulsion towards the reaction chamber 45 again. The return valve 56 is used to prevent fluid circulation if the pump 60 is not in operation. When the pump 60 rotates, the pressure is sufficiently high to open the return valve 56.

The outflow rate of the emulsion towards the injection pump through the emulsion outflow duct 55 is regulated by the pressure prevailing at the inlet port of the injection pump in combination with the pressure sensitive supply rate provided by the fuel and water supply pumps shown in Fig. 7. The electromagnet 66 causes periodic up and down movement of the shaft 67, whereby the alternating movement of the two pistons in the respective pumps supplies fuel and water to the emulsion channel 75 with a predetermined proportion. If the pressure is increased in the system, then the braking forces acting on the pump will be increased accordingly and the stroke of the electromagnet decreases. By proper dimensioning it can be attained that the required amount of emulsion be supplied by the pumps. If the supply is higher than the need of the injection pump, then the excess emulsion can be returned through the inlet duct 63. The embodiment shown in Figs. 5 to 8 can supply about 60 l/h emulsion, while the typical recirculation rate is 3000 l/h.

It should be noted that the energy required for maintaining the recirculation i.e. the energy demand of the recirculating pump 60 and of the electromagnet 66 is very small compared to the very high energy required in most of known static mixers. This advantage is provided by the comparatively small flow resistance of the emulsion recirculating path.

An advantage of the second embodiment over the first one lies in the substantially decreased volume of the recirculating emulsion, which reduces response time at engine starting or if the water content is changed during run of the engine.

At a typical load of the engine the pressure at the inflow port of the injection pump is 2.4 bar, and at this load the pressure values are as follows :

– at the pressure side of the recirculating pump 66 : 3 bar
– at the mouth of the emulsion outflow duct 55 : 2.4 bar
– at the lower half of return valve 56 : 1.8 bar which remains in the inlet side of the pump 66 and in the emulsion channel 75.

The proportion of water to fuel in the mixture can be varied within a wide range. In generally used diesel engines, however, the increase of water quantity above 10% start to remarkably reduce the effective power of the motor. If wanted, such power loss can be compensated by re-adjusting the injected amount of diesel fuel at the injection pump. Such re-adjustment can be made as suggested in connection with Fig. 10 which can provide standard power to the engine. The optimum percentage of water to fuel is between about 10% to 20% and the range between 5% to 10% and 20% to 25% is still preferable. Values below or above these limits can be acceptable, however, they cannot provide the benefits connected with the preferable ranges. Under 5% water content the improvement of the composition of the exhaust gases is not as significant to make the use of the apparatus profitable.

Preliminary tests were made on actual diesel engines of various makes and sizes (from about 1800 cc to 14285 cc) both natural aspirated and turbo/charged. The analysis of exhaust gases has demonstrated that the amount of nitrogen oxide referred simply to NOX has been reduced by at least 15% when using 10 Vol% water in the diesel fluid and this reduction increased up to 40% when the amount of water was increased to 22 Vol%. The amount of black smoke and soot has been reduced from 30% with 10 Vol% water content to 60% with 22 Vol% water content. The reduction of the masses of particulates has been about 12% with 10 Vol% water content and about 40% with 22% water content. These values were measured on a DYNO measuring system by carrying out the standard ECE R49 test cycle. The system comprised test equipment prescribed by the ECE R49 Test. The reduction values referred to here represent the average of values obtained by several measurements each using the 13 steps of the ECE R 49 cycles. Tables 1 to 3 demonstrate three typical tests protocols carried out by diesel fuel without water, with a water content of 15.83 Vol% and 23.64 Vol%.

It should be noted that tests other than reflected in tables 1 to 3 were carried out. In the following table the labelling of the columns need no specific explanation. The last column "SZ" refers to black smoke and soot measurement with the Bosch method.

Concerning hydrocarbons it should be added that contrary to the literature and comparative tests with other kinds of emulsions the apparatus according to the invention reduces the hydrocarbon emissions at high revolutions quite considerably. A reduction of 28% HC and 75% smoke at full load and 2000 Rpm will equal a reduction of the particulates of 50%.

TABLE 1                                    Pure diesel fluid

| Mode | n | torque Nm | power kW | b mbar | t1 inlet | t2 water | t3 oil | t4 exh | t5 fuel | NOx ppm | CO ppm | $CO_2$ % | SZ Bosch |
|---|---|---|---|---|---|---|---|---|---|---|---|---|---|
| 1 | 525 | 14,46 | 0,75 | 938,35 | 27,9 | 80 | 80 | 120 | 22,2 | 147 | 440 | 1,3 | 0 |
| 2 | 1200 | 72,41 | 8,69 | 938,35 | 27,2 | 80 | 81 | 160 | 21,8 | 335 | 446 | 2,1 | 0 |
| 3 | 1200 | 184,24 | 22,11 | 938,35 | 27,2 | 81 | 84 | 200 | 21,6 | 565 | 518 | 3,2 | 0,1 |
| 4 | 1200 | 370,09 | 44,41 | 938,35 | 27,9 | 82 | 85 | 290 | 21,4 | 995 | 469 | 5 | 0,6 |
| 5 | 1200 | 554,34 | 66,52 | 938,35 | 27,7 | 83 | 86 | 370 | 21,7 | 1481 | 489 | 7,2 | 1,5 |
| 6 | 1200 | 738,58 | 88,63 | 938,35 | 27,9 | 84 | 88 | 380 | 22,3 | 1771 | 746 | 9,7 | 3,2 |
| 7 | 525 | 14,48 | 0,76 | 938,35 | 28,6 | 80 | 80 | 160 | 21,9 | 194 | 416 | 1,6 | 0 |
| 8 | 2000 | 687,89 | 137,58 | 938,35 | 27,8 | 85 | 94 | 600 | 23,6 | 2032 | 1671 | 10,4 | 2,76 |
| 9 | 2000 | 514,91 | 102,98 | 938,35 | 28,2 | 84 | 97 | 580 | 23,8 | 1898 | 592 | 7,9 | 1,1 |
| 10 | 2000 | 343,07 | 68,61 | 938,35 | 28,6 | 84 | 96 | 390 | 21,3 | 1458 | 446 | 5,9 | 0,3 |
| 11 | 2000 | 171,13 | 34,23 | 938,35 | 28,3 | 84 | 96 | 300 | 17,5 | 793 | 424 | 3,8 | 0,1 |
| 12 | 2000 | 67,81 | 13,56 | 938,35 | 28,4 | 83 | 94 | 240 | 15,4 | 455 | 397 | 2,7 | 0,1 |
| 13 | 525 | 14,53 | 0,76 | 938,35 | 29,1 | 80 | 80 | 140 | 18,2 | 184 | 391 | 1,5 | 0 |
| | | | | | | | | | Total: | 12308 | 7445 | | 9,76 |

TABLE 2                         diesel fluid including 15,83 Vol% water

| Mode | n | torque Nm | power kW | fuel kg/h | fuel gk W/h | b mbar | t1 inlet | t2 wat | t3 oil | t4 exh | t5 fuel | NOx ppm | % +/- | CO ppm | % +/- | CO$_2$ % | SZ Bosch | % +/- |
|---|---|---|---|---|---|---|---|---|---|---|---|---|---|---|---|---|---|---|
| 1 | 525 | | | | | 945,02 | 31,4 | 80 | 76 | 110 | 24,8 | 155 | -11,4 | 710 | +65,5 | 1,9 | 0 | |
| 2 | 1200 | 68,24 | 8,19 | 4,411 | 0,539 | 945,02 | 31,8 | 83 | 80 | 180 | 19,5 | 185 | -49,0 | 1015 | +89,7 | 2,7 | 0 | |
| 3 | 1200 | 180,64 | 21,68 | 6,485 | 0,299 | 945,02 | 31,8 | 83 | 82 | 200 | 17,5 | 347 | -40,1 | 834 | +47,3 | 3,6 | 0 | |
| 4 | 1200 | 365,29 | 43,84 | 10,00 | 0,228 | 945,02 | 31,9 | 83 | 84 | 280 | 17,9 | 767 | -29,4 | 487 | +0,9 | 5,4 | 0 | -10,0 |
| 5 | 1200 | 561,99 | 67,44 | 14,263 | 0,211 | 945,02 | 32,2 | 86 | 84 | 370 | 19,6 | 1238 | -25,5 | 453 | -14,0 | 7,7 | 0,6 | -40,0 |
| 6 | 1200 | 726,57 | 87,19 | 18,041 | 0,207 | 945,02 | 32,6 | 85 | 88 | 490 | 22,2 | 1563 | -21,6 | 485 | -26,7 | 9,8 | 2,6 | -13,3 |
| 7 | 525 | | | | | 945,02 | 33,1 | 81 | 72 | 160 | 21,7 | 145 | -39,8 | 660 | +55,3 | 1,9 | 0 | |
| 8 | 2000 | 678,4 | 135,68 | 30,508 | 0,224 | 945,02 | 32,4 | 86 | 98 | 570 | 20,8 | 1889 | -11,8 | 669 | -59,7 | 10,2 | 1,8 | -41,9 |
| 9 | 2000 | 497,76 | 99,55 | 23,173 | 0,233 | 945,02 | 33,6 | 86 | 99 | 460 | 23,5 | 1386 | -28,0 | 361 | -37,0 | 7,5 | 0,4 | -50,0 |
| 10 | 2000 | 334,27 | 66,85 | 17,43 | 0,261 | 945,02 | 33,3 | 85 | 97 | 470 | 18,1 | 921 | -32,3 | 372 | -7,0 | 5,6 | 0,1 | -50,0 |
| 11 | 2000 | 169,43 | 33,89 | 12,164 | 0,359 | 945,02 | 33,4 | 85 | 96 | 300 | 15,9 | 577 | -25,6 | 499 | +27,9 | 4,3 | 0 | |
| 12 | 2000 | 64,54 | 12,91 | 9,016 | 0,698 | 945,02 | 33,1 | 85 | 94 | 240 | 10,9 | 344 | -30,6 | 547 | +48,6 | 3,3 | 0 | |
| 13 | 525 | 16,11 | 0,85 | 1,294 | 1,530 | 945,02 | 32,9 | 81 | 74 | 130 | 12 | 161 | -14,4 | 576 | +73,5 | 2,0 | 0 | |

Total:     9678   -25,5   7668   +4,2

EP 0 313 086 B1

TABLE 3                                    diesel fluid including 23,64 Vol % water

| Mode | n | torque Nm | power kW | fuel kg/h | fuel gkW/h | b mbar | t1 inlet | t2 wat | t3 oil | t4 exh | t5 fuel | NOx ppm | % +/– | CO ppm | % +/– | CO$_2$ %$^2$ | SZ Bosch | % +/– |
|---|---|---|---|---|---|---|---|---|---|---|---|---|---|---|---|---|---|---|
| 1 | 525 | 9,51 | 0,50 | | | 952,35 | 20,6 | 80 | 78 | 130 | 16,0 | 106 | –27,9 | 745 | + 69,3 | 1,3 | 0 | |
| 2 | 1200 | 72,93 | 8,75 | 4,692 | 0,536 | 952,35 | 20,8 | 82 | 81 | 150 | 13,2 | 118 | –64,8 | 1416 | +217,5 | 2,1 | 0 | |
| 3 | 1200 | 183,91 | 22,07 | 6,681 | 0,303 | 952,35 | 20,8 | 82 | 83 | 190 | 11,7 | 238 | –57,9 | 1119 | +116,0 | 3,2 | 0 | |
| 4 | 1200 | 368,62 | 44,23 | 10,155 | 0,230 | 952,35 | 20,7 | 83 | 84 | 260 | 12,2 | 555 | –44,2 | 632 | + 34,8 | 4,9 | 0 | |
| 5 | 1200 | 553,32 | 66,40 | 14,013 | 0,211 | 952,35 | 20,5 | 83 | 85 | 350 | 14,0 | 884 | –40,3 | 571 | + 16,8 | 7,1 | 0,2 | –86,7 |
| 6 | 1200 | 737,24 | 88,47 | 17,809 | 0,201 | 952,35 | 20,2 | 84 | 86 | 420 | 15,7 | 1089 | –38,5 | 699 | – 6,3 | 9,3 | 2,3 | –28,1 |
| 7 | 525 | 8,72 | 0,46 | . | | 952,35 | 19,8 | 81 | 79 | 160 | 17,1 | 119 | –38,7 | 845 | +103,1 | 1,3 | 0 | |
| 8 | 2000 | 686,50 | 137,30 | 30,835 | 0,225 | 952,35 | 20,4 | 86 | 98 | 560 | 16,1 | 1625 | –20,0 | 763 | – 54,3 | 9,1 | 1,3 | –52,9 |
| 9 | 2000 | 515,27 | 103,05 | 23,226 | 0,225 | 952,35 | 19,8 | 85 | 98 | 450 | 16,8 | 1209 | –36,3 | 504 | – 14,9 | 7,2 | 0,2 | –81,8 |
| 10 | 2000 | 343,25 | 68,65 | 18,00 | 0,262 | 952,35 | 19,8 | 85 | 98 | 380 | 14,1 | 809 | –44,5 | 468 | + 4,9 | 5,2 | 0 | |
| 11 | 2000 | 171,23 | 34,25 | 12,59 | 0,368 | 952,35 | 20,0 | 84 | 97 | 290 | 10,9 | 409 | –48,4 | 661 | + 55,9 | 3,5 | 0 | |
| 12 | 2000 | 63,42 | 12,68 | 9,592 | 0,756 | 952,35 | 20,3 | 84 | 96 | 260 | 7,5 | 228 | –49,9 | 762 | + 91,9 | 2,6 | 0 | |
| 13 | 525 | 7,93 | 0,41 | | | 952,35 | 20,1 | 81 | 82 | 140 | 7,1 | 122 | –33,7 | 614 | + 57,0 | 1,3 | 0 | |

Total:                                    7511 –39,0 9799 + 31,3        4   –59,0

EP 0 313 086 B1

The tests reported in Tables 1 to 3 relate to the first embodiment. We have made comparative quick tests with the second embodiment shown in Figs. 5 to 8 and obtained similar or slightly better results.

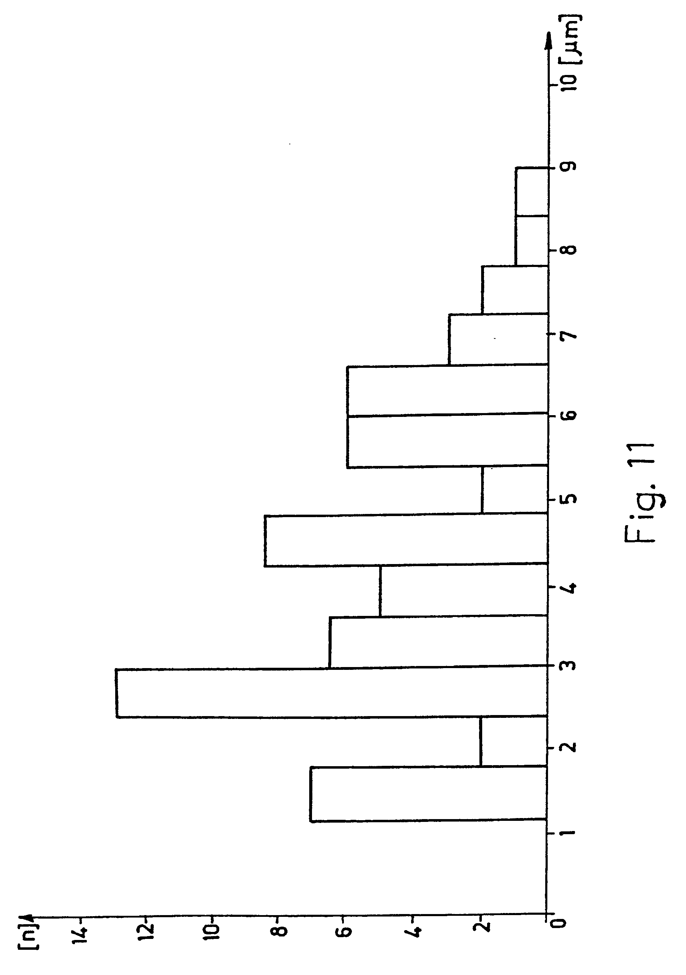

To demonstrate the distinctive properties of the emulsion made according to the invention further tests were carried out. These included the microscopic analysis of water droplets in fuel including the determination of their size and size distribution. The emulsion was made in such a way that the water used was colored by a neutral paint to blue and a blue light was used to avoid warming up of the droplets in the sample during microscopic inspection. A distance of 20 microns were kept between the glass plates to avoid deformation of the sample. The plates were covered by a thin film of paraffin, whereby spreading of the droplets on the glass surface was eliminated. Fig. 11 shows the size distribution of water droplets in an emulsion that comprises 15 Vol% water. The vertical axis gives the number of droplets with the associated size in the sample.

It can be seen from Fig. 11 that the distribution is almost a Gaussian curve with a medium size of about 4.5 micron. The size distribution differs from conventional ones in the uniformity of size, since according to various literature sources the distribution curve is much wider and it often has several peaks falling to largely differing sizes. The emulsion made according to the invention has a characteristic, slightly opaque color which differs in shade from that of the fuel it contains.

In order to determine whether the mixing process according to the invention does actually cause structural changes in the fuel, a calorimetric test series was performed. As a first step an emulsion comprising 15 Vol% water was made. The water used for making the emulsion was painted to have a well detectable blue color. Samples were taken from the diesel fuel which was used for making the emulsion. The water component was then separated from the emulsion by means of centrifuging at 3.000 r.p.m. for 10 minutes. Samples were taken from the remaining fuel component of the emulsion. The diesel fuel used as control was also centrifuged.

The original and the separated fuel samples were then subjected to calorimetric measurements in a precision calorimeter. The calorimetric (heating) values of the test and control material were measured three times.

The results of the measurements were as follows :

|  | Original diesel fuel (emulsion) c.v. (joule/gram) | fuel separated from the <-> c.v. (joule/gram) |
|---|---|---|
| 1 | 42.886 | 43.070 |
| 2 | 43.107 | 43.028 |
| 3 | 42.978 | 43.061 |
| average: | 42.990 | 43.053 |

It can be seen from these data that the calorimetric value of the fuel comprised in the emulsion is by 63 j/g higher than that of the starting one. The difference was almost 1.5 thousandth, which is already a distinctive value, if we consider that the c.v. of lighter carbon hydrogens is only by small values higher than that of heavier ones. Nevertheless such measurements are used generally for distinguishing various carbon hydrogen fractions and such measurements are reliable.

If it is assumed that the separation of water was not perfect, then the error caused by the presence of residual water would tend to decrease the measured value, thus in the reality the difference can only be higher compared to the above values.

This result has demonstrated that the structure of the fuel must have been changed during the water affixing method, and this differing structure makes it plausible why the exhaust gases are different in case of emulsions made according to the invention from those obtained by conventional ways. In other words no other explanation can be given to the existence of differences both in exhaust and in calorimetric values between the control and examined group.

**Claims**

1. Method for mixing fuel with water to obtain a combustible emulsion, in which the amount of water to fuel falls in a range of 5 to 20 Vol%, in which the fuel and the water are fed into a reaction space (10, 45) in a ratio falling in said range and are intensively moved and recirculated in a closed loop, in which the reaction space (10, 45) is provided, the streaming fluid in the reaction space (10, 45) being forced to rotate around and moved along the axis (9, 46) of rotation of said space (10, 45) and a portion of the recirculated fluid is led out of the loop, characterized in that the reaction space (10, 45) has a tapering cross-section in flow direction so that the pressure continuously decreases both along said axis and in radial direction towards said axis, the fluid which is rotating around said axis (9, 46) when leaving said space is caused to rotate around a second axis (17, 54) being normal to said first axis (9, 46) which causes gradual braking down and cessation of said first rotation movement, wherein the ratio between the mixture portion led out of the loop and the recirculating mixture is at most 1 : 10 so that in average the fluid particles are caused to participate at least in ten full recirculation cycles before they leave the loop.

2. The method as claimed in claim 1, wherein the fluid flowing out from the reaction space (10) is passed tangentially in a vortex chamber (16) to form a vortex around said second axis (17).

3. The method as claimed in claim 1, wherein the fluid flowing out from the reaction space (45) is directed to flow in an inward spiral movement around said second axis (54), said led out portion of recirculated fluid being branched off at the starting point of said spiral movement.

4. The method as claimed in claim 1, wherein the pressure of the recirculating fluid is increased at least by 0.8 and at most by 3 bars by means of a pump (60) arranged in said loop.

5. The method as claimed in claim 1, wherein said fuel is diesel fuel and the emulsion is passed to an injection pump of a diesel engine having a return line which is fed back in the circulating loop.

6. The method as claimed in claim 5, characterized in that the pressure prevailing in said loop is kept below 6 bars.

7. Apparatus for carrying out the method as claimed in claim 2, in which a recirculating loop is formed that comprises a pump and a vortex housing (6), characterized in that the recirculating loop further comprises a pressure equalizing chamber (4) around the vortex housing connected to the pressure side of the pump, a first vortex chamber (10) in said vortex housing (6) with an elongated ellipsoidal shape having a tapering neck portion and a longitudinal axis (9), a number of tangential inlet holes (13) defined in the vortex housing (6) along a periphery close to the neck portion, the axes of the inlet holes (13) being inclined towards the end of the ellipsoid opposite to the neck portion, a tapering duct (24) with a mouth (27) substantially larger than and communicating with the opening (12) of the neck portion (11), a second vortex chamber (16) with an axis (17) of rotation substantially normal to the axis (9) of the first vortex chamber (10), the second vortex chamber (16) having a spherical upper part (18), a hyperboloidal medium part (19) tapering in downward direction, and a neck (20), the duct (24) leading tangentially into the second vortex chamber (16) substantially at the equatorial plane of the spherical part (18), and a passage (30) connecting the neck (20) of the second vortex chamber (16) with the suction side of the pump, an inflow passage for the water and fuel communicating with the passage (30) and an outflow opening (21) being defined at the wall of the second vortex chamber (16) substantially at the equatorial plane of the spherical part (18).

8. The apparatus as claimed in claim 7, characterized in that said pressure equalizing chamber (4) has an annular shape encircling the vortex housing (6) and each of the inlet holes (13) comprises a countersink (15) with an axis substantially normal to the mantle surface of the vortex housing (6) and a jet portion (14) with an axis inclining rearwardly and tangentially relative to the first vortex chamber (10).

9. The apparatus as claimed in claim 7 or 8, characterized in that the outflow opening (21) is coupled to a fuel pump of a diesel engine provided by a return line which is fed back to the passage (30).

10. Apparatus for mixing fuel and water comprising a recirculation pump (60), a recirculation path between outlet and inlet of said pump, a reaction chamber (48) arranged as a static mixer inserted in said path, means for supplying a mixture of fuel and water in said path and outlet (55) for supplying said emulsion, said reaction chamber (45) having a rotational symmetrical form around a first axis (46) and having a head portion (47) with tangential inlet holes (51) around the periphery communicating with a ring channel (50) defined around said periphery and fed from said pump (60), and the reaction chamber further having a tapering portion (48) with an outflow opening (49), characterized in that a spiral channel (53) is provided with a central axis (54) normal to the axis (46) of the reaction chamber (45), said outflow opening communicating with peripheral part of the spiral channel (53) and a bore is defined at the central portion of the spiral channel (53) which is connected to said recirculation path, wherein said outlet (55) is branched off at the entry of the spiral channel (53).

11. The apparatus as claimed in claim 10, wherein a biased return valve (56) is inserted in said recirculating path.

12. The apparatus as claimed in claim 10, wherein said tapering portion has an exponential profile.

13. The apparatus as claimed in claim 10, wherein said means for supplying mixture of fuel and water comprises an electromagnet (66) having a shaft (67) reciprocating in axial direction, separate fuel pump and water pump having respective pistons are mounted on said shaft (67), said pumps have respective inlet and outlet valves, said outlet valves (73, 74, 79) have outflow ports communicating with emulsion channel (75) connected to said recirculation path.

14. The apparatus as claimed in claim 13, wherein said water pump has a piston element (77) biased by springs so that the coupling thereof with said shaft (67) depends on the pressure prevailing in said emulsion channel (75) to decrease or stop pumping of water if the pressure in said channel (75) increases above a predetermined threshold value.

15. The apparatus as claimed in any of claims 10 to 14, wherein the outflow opening (55) is coupled to a fuel injection pump of a diesel engine provided by a return line which is fed back to the recirculation path, and said apparatus comprises means for adjusting fuel supply of the engine in accordance with water content in the emulsion to compensate loss of power.

16. The apparatus as claimed in claim 10, wherein the reaction chamber (45) has a cross-sectional profile similar to a heart form.

## Ansprüche

1. Verfahren zum Mischen von Brennöl mit Wasser, um eine brennbare Emulsion mit einem Anteil von Wasser zu Brennöl im Bereich von 5 bis 20 Vol% zu erhalten, bei welchem das Brennöl und das Wasser in einem in diesen Bereich fallenden Verhältnis in einen Reaktionsraum eingespeist werden und in einem geschlossenen Kreislauf intensiv bewegt und rezirkuliert werden, in dem der Reaktionsraum (10, 45) angeordnet ist, die strömerde Flüssigkeit um die Rotationsachse (9, 46) dieses Raumes (10, 45) in Rotationsbewegung und in Bewegung längs der Achse gezwungen wird und ein Teil der rezirkulierten Flüssigkeit herausgeführt wird, dadurch gekennzeichnet, daß der Reaktionsraum (10, 45) einen sich in Strömungsrichtung verjüngenden Querschnitt aufweist, so daß der Druck kontinuierlich sowohl entlang der Achse als auch in radialer Richtung zu der Achse hin geringer wird, daß die um die Achse (9, 46) rotierende Flüssigkeit beim Verlassen des Raumes zu einer Rotation um eine zweite Achse (17, 54) gezwungen wird, welche zu der ersten Achse (46) senkrecht liegt, wodurch die erste Rotationsbewegung allmählich abgebremst wird und zum Stillstand kommt, wobei das Verhältnis zwischen dem aus dem Kreislauf herausgeführten Mischungsteil und der rezirkulierten Mischung höchstens 1 : 10 ist, so daß im Durchschnitt die Flüssigkeitsteilchen vor dem Verlassen des Rezirkulationskreises an mindestens zehn vollen Rezirkulationszyklen teilnehmen.

2. Verfahren nach Anspruch 1, bei welchem die aus dem Reaktionsraum (10) ausströmende Flüssigkeit tangential in eine Wirbelkammer (16) eingeleitet wird, damit ein Wirbel um die zweite Achse (17) gebildet wird.

3. Verfahren nach Anspruch 1, bei welchem die aus dem Reaktionsraum (45) ausströmende Flüssigkeit zum Strömen in einer nach innen gerichteten Spiralbewegung um die zweite Achse (54) geleitet wird, und daß der herausgeführte Teil der rezirkulierten Flüssigkeit bei dem Ausgangspunkt der Spiralbewegung abgezweigt wird.

4. Verfahren nach Anspruch 1, bei welchem der Druck der rezirkulierten Flüssigkeit von einer in dem Kreislauf angeordneten Pumpe (60) um mindestens 0,8 bar und höchstens 3 bar erhöht wird.

5. Verfahren nach Anspruch 1, bei welchem das Brennöl Dieselöl ist und die Emulsion einer Einspritzpumpe eines Dieselmotors zugeführt wird und dieser einen in den Rezirkulationskreis zurückgeführten Rückführkanal aufweist.

6. Verfahren nach Anspruch 5, dadurch gekennzeichnet, daß der in dem Rezirkulationskreis herrschende Druck unter 6 bar gehalten wird.

7. Vorrichtung zum Durchführen des Verfahrens nach Anspruch 2, in der ein Rezirkulationskreis mit einer Pumpe und einem Wirbelkammergehäuse (6) angeordnet ist, dadurch gekennzeichnet, daß der Rezirkulationskreis weiter eine mit der Druckseite der Pumpe verbundene und rings des Wirbelkammergehäuses ausgebildete Druckausgleichkammer (4), eine erste in dem Wirbelkammergehäuse (6) ausgebildete Wirbelkammer (10) mit einer langgestreckten, einen sich verjüngenden Halsteil aufweisenden Ellipsoidform mit einer Längsachse (9), eine Mehrzahl von am Umfang des Wirbelkammergehäuses (6) in diesem in der Nähe des Halsteils ausgebildeten tangential ausgerichteten Einlaßöffnungen (13), wobei die Achsen der Einlaßöffnungen (13) schräg in Richtung zu dem dem Halsteil abgewandten Ende des Ellipsoides gerichtet sind,

einen sich verjüngenden Kanal (24) mit einer Mündung (27), die wesentlich größer als die Öffnung (12) des Halsteils (11) ist und mit dieser verbunden ist, eine zweite Wirbelkammer (16) mit einer Rotationsachse (17), welche zu der Achse (9) der ersten Wirbelkammer (10) im wesentlichen senkrecht ist, wobei die zweite Wirbelkammer (16) einen sphärischen oberen Teil (18), einen hyperbolischen sich nach unten verjüngenden Mittelteil (19) und einen Hals (20) aufweist und der Kanal (24) tangential im wesentlichen in der Äquatorebene des kugelförmigen Teils (18) in die zweite Wirbelkammer (16) einmündet, und einen Durchlaß (30), der den Hals (20) der zweiten Wirbelkammer (16) mit der Saugseite der Pumpe verbindet, einen mit dem Durchlaß (30) verbundenen Einlaßkanal für Wasser und Brennöl, und eine Auslaßöffnung (21) aufweist, die in der Wand der zweiten Wirbelkammer (16) im wesentlichen in der Äquatorebene des sphärischen Teils (18) ausgebildet ist.

8. Vorrichtung nach Anspruch 7, dadurch gekennzeichnet, daß die Druckausgleichkammer (4) eine ringförmige Gestalt aufweist und das Wirbelkammergehäuse (6) umschließt, wobei jede der Einlaßöffnungen (13) eine Ansenkung (15) mit einer im wesentlichen senkrecht zur Mantelfläche des Wirbelkammergehäuses (6) liegenden Achse und einen Düsenteil (14) mit einer Achse aufweist, die sich schräg nach hinten und tangential zu der ersten Wirbelkammer (10) erstreckt.

9. Vorrichtung nach Anspruch 7 oder 8, dadurch gekennzeichnet, daß die Auslaßöffnung (21) mit einer Einspritzpumpe eines Dieselmotors verbunden ist, welche mit einem in den Durchlaß (30) zurückgeführten Rückführkanal versehen ist.

10. Vorrichtung zum Mischen von Brennöl und Wasser, mit einer Rezirkulationspumpe (60), einem Rezirkulationskanal zwischen Auslaß und Einlaß der Pumpe, einer als statischer Mischer ausgebildeten und in den Rezirkulationskanal eingeschalteten Reaktionskammer (48), Mittel zum Einspeisen eines Gemisches aus Brennöl und Wasser in den Rezirkulationskanal und einem Auslaß (55) zum Bereitstellen der Emulsion, wobei die Reaktionskammer (45) eine rotationssymmetrische Form rings einer ersten Achse (46) hat, und einen Kopfteil (47) mit tangential gerichteten und an dessen Umfang verteilten Einlaßöffnungen (51) aufweist, die mit einem rings des umfangs angeordneten und von der pumpe (60) gespeisten ringkanal (50) verbunden sind, wobei die reaktionskammer weiterhin einen sich verjüngenden teil (48) mit einer auslaßöffnung (49) aufweist, dadurch gekennzeichnet, daß ein spiralförmiger kanal (53) mit einer senkrecht zu der achse (46) der reaktionskammer (45) liegenden zentralen achse (54) vorhanden ist, wobei die auslaßöffnung mit dem äußeren teil des spiralförmigen kanals (53) verbunden ist und im mittelteil des spiralfömigen kanals (53) eine bohrung ausgebildet ist, welche an den rezirkulationskanal angeschlossen ist, wobei der auslaß (55) bei dem eingang des spiralförmigen kanals (53) abgezweigt ist.

11. Vorrichtung nach anspruch 10, bei welcher in den rezirkulationskanal ein vorgespanntes rückschlagventil (56) eingeschaltet ist.

12. Vorrichtung nach anspruch 10, bei welcher der sich verjüngende teil ein profil in form einer exponentialfunktion aufweist.

13. Vorrichtung nach anspruch 10, bei welcher die mittel zum einspeisen eines gemisches aus brennöl und wasser einen elektromagneten (66) mit einer in axialer richtung oszillierenden stange (67) aufweisen, wobei gesonderte brennöl-und wasserpumpen jeweils einen an die stange (67) montierten kolben aufweisen und die pumpen jeweils einlaß-und auslaßventile aufweisen, wobei die auslaßventile (73, 74, 79) auslaßmündungen aufweisen, welche mit dem emulsionskanal (75) in verbindung stehen, welcher seinerseits mit dem rezirkulationskanal verbunden ist.

14. Vorrichtung nach anspruch 13, bei welcher die wasserpumpe ein durch federn vorgespanntes kolbenelement (77) aufweist, so daß dessen verbindung mit der stange (67) von dem in dem emulsionskanal (75) herrschenden druck abhängig ist, um das pumpen des wassers zu vermindern oder zu unterbrechen, wenn der in dem emulsionskanal (75) herrschende druck einen vorbestimmten schwellwert übersteigt.

15. Vorrichtung nach einem der ansprüche 10 bis 14, bei welcher die auslaßöffnung (55) mit einer brennöleinspritzpumpe eines dieselmotors verbunden ist, welche mit einem in den rezirkulationskanal zurückgeführten rückführkanal versehen ist, wobei die vorrichtung mittel zum anpassen der brennölzufuhr zum motor in abhängigkeit vom wassergehalt der emulsion zum kompensieren eines leistungsverlustes aufweist.

16. Vorrichtung nach anspruch 10, bei welcher der reaktionsraum (45) ein der form eines herzens ähnliches längsschnittsprofil aufweist.

**Revendications**

1. Procédé pour mélanger du carburant avec de l'eau afin d'obtenir une émulsion combustible, dans lequel la quantité d'eau par rapport à la quantité de carburant est dans une gamme à 5 à 20% en volume, dans lequel le carburant et l'eau sont alimentés dans un espace de réaction (10, 45) dans un rapport compris dans ladite gamme et sont agités intensivement et recirculés en boucle fermée, comportant ledit espace de réaction (10, 45), le flux de fluide dans ledit espace de réaction (10, 45) étant entraîné en rotation et déplacé le long de l'axe (9, 46) de rotation dudit espace (10, 45), et une partie du fluide recirculé étant sortie de la boucle, caractérisé en ce que l'espace de réaction (10, 45) présente une section effilée dans le sens du débit afin que la pression décroisse de façon continue le long dudit axe et dans le sens radial vers ledit axe, le fluide en rotation autour dudit axe (9, 46) à la sortie dudit espace étant entraîné en rotation autour d'un deuxième axe (17, 54) perpendiculaire audit premier axe (9, 46) donnant lieu à un freinage progressif et une interruption dudit premier mouvement de rotation, dans lequel le rapport entre la partie du mélange qui passe hors de la boucle et la partie du mélange qui recircule est au plus de 1 : 10 de manière à ce qu'en moyenne, les particules du fluideparticipent à au moins dix cycles complets de recirculation avant de quitter la boucle.

2. Procédé selon la revendication 1, dans lequel le débit de fluide quittant l'espace de réaction (10) passe tangentiellement dans une chambre à tourbillon (16) afin d'établir un tourbillon autour dudit deuxième axe (17).

3. Procédé selon la revendication 1, dans lequel on dirige le débit de fluide quittant l'espace de réaction (45) pour qu'il s'écoule avec un mouvement en spirale dirigé vers l'intérieur autour dudit deuxième axe (54), ladite partie du fluide quittant la boucle étant prélevée au point de départ dudit mouvement en spirale.

4. Procédé selon la revendication 1, dans lequel la pression du fluide en recirculation est augmentée d'au moins 0,8 et d'au plus 3 bars au moyen d'une pompe (60) disposée dans ladite boucle.

5. Procédé selon la revendication 1, dans lequel ledit carburant est du carburant diesel et l'émulsion est alimentée à la pompe d'injection d'un moteur diesel ayant une ligne de retour qui est introduite de nouveau dans la boucle de recirculation.

6. Procédé selon la revendication 5, caractérisé en ce que la pression à l'intérieur de ladite boucle est maintenue en-dessous de 6 bars.

7. Dispositif pour mettre en oeuvre le procédé selon la revendication 2, dans lequel une boucle de recirculation est établie, comprenant une pompe et un logement de tourbillon (6), caractérisé en ce que la boucle de recirculation comporte de plus une chambre d'égalisation de pression (4) autour du logement de tourbillon connecté au côté de refoulement de la pompe, une première chambre à tourbillon (10) ménagée dans ledit logement de tourbillon (6) de forme ellipsoïdale ayant une partie en forme de goulot effilé et un axe longitudinal (9), une pluralité de trous d'entrée (13) disposés tangentiellement définis dans le logement de tourbillon (6) et disposés le long d'un contour proche de ladite partie en goulot, les axes des trous d'entrée (13) étant inclinés vers le bout de l'ellipsoïde en face de la partie en goulot, un conduit rétréci (24) ayant une embouchure (27) sensiblement plus grande que l'ouverture (12) de la partie en goulot (11) et en communication avec ladite ouverture, une deuxième chambre à tourbillon (16) ayant un axe de rotation (17) disposé sensiblement perpendiculaire à l'axe (9) de ladite première chambre à tourbillon (10), cette deuxième chambre à tourbillon (16) ayant une partie supérieure (18) en forme de sphère, une partie centrale (19) en forme d'hyperboloïde qui se rétrécit vers le bas, et un goulot (20), ledit conduit (24) débouchant tangentiellement dans ladite deuxième chambre à tourbillon (16) sensiblement au plan équatorial de ladite partie (18) en forme de sphère, et un passage (30) prévu pour relier le goulot (20) de la deuxième chambre à tourbillon (16) avec le côté d'aspiration de la pompe, un passage d'entrée d'eau et de carburant étant relié avec ledit passage (30) et une ouverture de sortie (21) étant définie sur la paroi de la deuxième chambre à tourbillon (16) sensiblement dans le plan équatorial de sa partie (18) en forme de sphère.

8. Dispositif selon la revendication 7, caractérisé en ce que ladite chambre d'égalisation de pression (4) a une forme annulaire encerclant ledit logement de tourbillon (6) et chacun des trous d'entrée (13) comportant un contre-perçage (15) ayant son axe sensiblement perpendiculaire au pourtour de surface du logement à tourbillon (6) et une partie en forme de buse (14) ayant son axe incliné vers l'arrière et tangentiellement par rapport à ladite première chambre à tourbillon (10).

9. Dispositif selon la revendication 7 ou 8, caractérisé en ce que l'ouverture de sortie (21) est accouplé à la pompe de carburant d'un moteur diesel au moyen d'une ligne de retour de carburant qui est renvoyée dans une boucle vers le passage (30).

10. Dispositif pour mélanger du carburant et de l'eau comportant une pompe de recirculation (60), un chemin de circulation entre la sortie et l'entrée de ladite pompe, une chambre de réaction (48) disposée en tant que mélangeur statique ménagé dans ledit chemin, des moyens pour alimenter ledit chemin avec un mélange de carburant et d'eau dans ledit chemin et à une sortie (55) d'alimentation d'émulsion, ladite chambre de réaction (45) ayant une forme symétrique monté à rotation autour d'un premier axe (46) et ayant une partie de tête (47) équipée de trous d'entrée (51) disposés tangentiellement autour de sa surface périphérique en communication avec un passage annulaire (50) défini autour de ladite surface périphérique et alimenté par ladite pompe (60), ladite chambre de réaction ayant de plus une partie de forme effilée (48) avec une ouverture de décharge (49), caractérisé en ce qu'un passage en spirale (53) comporte un axe central (54) qui est perpendiculaire à l'axe (46) de la chambre de réaction (45), ladite sortie de décharge se reliant à la partie périphérique dudit passage en spirale (53), ce passage en spirale (53) comportant un alésage à sa partie centrale qui est relié audit chemin de recirculation, et dans lequel ladite sortie d'émulsion (55) est dérivée à l'entrée du passage en spirale (53).

11. Dispositif selon la revendication 10, dans lequel ledit chemin de circulation comporte une valve de retour (56) pré-chargée.

12. Dispositif selon la revendication 10, dans lequel ladite partie effilée possède un profil de forme exponentielle.

13. Dispositif selon la revendication 10, dans lequel lesdits moyens d'alimentation de mélange de carburant et d'eau comprennent un électro-aimant (66) ayant un arbre (67) effectuant un mouvement axial oscillatoire, des pompes à carburant et à eau séparées ayant des pistons respectifs étant montés sur ledit arbre (67), lesdites pompes ayant respectivement des valves d'entrée et de sortie, lesdites valves de sortie (73, 74, 79) ayant des orifices de décharge qui sont reliés à un passage d'émulsion (75) connecté audit chemin de recirculation.

14. Dispositif selon la revendication 13, dans lequel ladite pompe à eau est équipée d'un élément à piston (77) préchargé par des ressorts de telle sorte que le couplage dudit élément à piston avec l'arbre (67) dépende de la pression dans ledit passage d'émulsion (75) de manière à ce que le pompage de l'eau soit diminué ou arrêté si la pression dans ledit passage (75) dépasse une valeur de seuil prédéterminée.

15. Dispositif selon l'une quelconque des revendications 10 à 14, dans lequel l'ouverture de décharge (55) est accouplé à la pompe d'injection de carburant d'un moteur diesel équipé d'une ligne de retour qui retourne en boucle sur le chemin de recirculation, ledit dispositif comportant des moyens pour régler l'alimentation du moteur en carburant en fonction du contenu de l'eau dans l'émulsion afin de compenser une perte de puissance.

16. Dispositif selon la revendication 10, dans lequel la chambre de réaction (45) a un profil de section analogue à la forme d'un coeur.

Fig.1

Fig.2

**Fig.4**

**Fig.3**

60

52a

61

37

62

40

63

41d

Fig.5

Fig.6

Fig.7

49

53

55

Fig.8

67

82    81

83    77

Fig.9

85

84

86

Fig.10

Fig. 11